# EUROPEAN PATENT APPLICATION

(11) **EP 1 351 460 A2**
(43) Date of publication of application: **08.10.2003**
(21) Application number: 03075562.3
(22) Date of filing: 25.02.2003
(51) Int. Cl.: H04L 12/56, H04L 12/413, H04L 25/14

(54) **Flow control and quality of service provision for ethernet networks**

(30) Priority: 28.03.2002 US 109217
(71) Applicant: Nortel Networks Limited, St. Laurent, Quebec H4S 2A9 (CA)
(72) Inventor: Davies, Elwyn B., Ely, Cambridgeshire CB7 5AW (GB); Wallace, Andrew D., Harlow, Essex CM17 9PF (GB); Unitt, Brian M., Bishops Stortford,Hertfordshire CM23 2QN (GB)
(74) Representative: Anderson, Angela

(57) **Abstract**

Apparatus and method for providing controlled Quality of Service over Ethernet-like links. Prioritised frames are allocated to transmission queues responsive to their priorities. Each queue has an associated subsidiary Ethernet MAC which transmits frames from its queue subject to a scheduler which selects from the set of MAC's according to a pre-determined algorithm. The multiple logical paths between corresponding pairs of transmitter and receiver subsidiary MAC's are preferably multiplexed over a single physical channel. If congestion occurs at the receiver, then Ethernet PAUSE frames may be sent back to the transmitter, directed to specific subsidiary MAC's - typically those with lower priority - to suspend transmission from the corresponding queue for a time period indicated in the PAUSE frame. In this way back pressure flow control may be applied selectively to so that large amounts of low priority traffic do not cause unnecessary delays to higher priority traffic.

## Description

### FIELD OF THE INVENTION

The present invention relates to a method and apparatus for improved flow control and Quality of Service (QoS) provision for packet-switched or frame relay protocols and a system incorporating the same.

### BACKGROUND TO THE INVENTION

Known full duplex Ethernet networks typically comprise a number of end stations linked through point-to-point links to a hub switch. Typically today such a hub switch will contain input buffering to cope with the situation where two or more input ports wish to send a packet simultaneously to the same output port on the switch. The optional PAUSE frame capability was introduced into the full-duplex Ethernet specification to allow the receiver on a link to signal back down the link to the corresponding transmitter that it should stop sending because the buffers on the receiving end are (nearly) full, and subsequent frames might have to be discarded if sent immediately. This allows the Ethernet port/network interface to buffer the additional frames or signal the client application to stop sending more frames until buffers were again available down the link. PAUSE frames received at a port contain a timeout value which is the time for which the port transmitter should stop sending frames. If the buffer is still full when the timeout is about to run out, the receiver should send another PAUSE frame to the transmitter.

If an Ethernet link transmitter supports IEEE standard 802.1Q-1998 frame prioritisation, frames can be marked by the originator with one of eight values indicating the transmission priority of the frame (7 - highest, 6, 5, 4, 3, 2, 0, 1-lowest: priority 1 is supposed to be lower than the default priority 0). Frames are queued for transmission in up to eight queues corresponding to ranges of priorities and frames are selected for transmission by a strict priority scheduler: frames at a priority lower than 7 will only be selected for transmission if there are no frames with a higher priority waiting.

A problem with this scenario is that if the receiver becomes blocked for any reason so that it would issue a PAUSE frame for the link, then the transmitter would stop sending all user frames because PAUSE frames are targeted at a particular MAC address or the connected transmitter (if the broadcast address is used). This situation may be less than ideal for several reasons including:
- If several hub input ports are sending both low and high priority traffic to an output port on a hub such that the output port is essentially saturated by the totality of the high priority traffic, then the hub buffers will gradually fill with low priority traffic which cannot be forwarded. Consider the situation in which the hub cannot send PAUSE frames because its output ports are saturated. Then, depending on the internal arrangement of the hub, this would mean that either all incoming frames would be dropped once the buffers filled up, stopping the reception of high priority traffic until the low priority traffic had been cleared from the buffers, or transmission bandwidth would be wasted in sending low priority traffic which would immediately be dropped whilst the high priority traffic is forwarded.
- In the case in which traffic on a port has been predominantly at a low priority, then the port may become blocked because the receiver buffers are full. In that case, if the hub can send PAUSE frames the transmitter is stopped even if a high priority frame arrived which could otherwise have been transmitted. This is because the PAUSE stops transmission of all traffic.

The 802.1Q specification does not mandate the provision of multiple queues at the receiver input. As a result blockage of a receiver may block all priorities of traffic at once.

It is also known, from IEEE standard 802.3 (2000 Edition), relating to Link Aggregation, to provide a method by which the bandwidth on a logical point-to-point link can be extended by using multiple parallel lower-bandwidth links. Traffic is multiplexed for transmission on one or other of the links, and then demultiplexed at the corresponding receivers. A 'conversation' mechanism is used to ensure that the frames originated by a particular application are not reordered as a result of this multiplexing/demultiplexing. From the point of view of an external client, the aggregated link looks like a single Ethernet connection with single MAC addresses at each end. Internally each link is given a separate pair of MAC addresses, but these are hidden from the external user.

### OBJECT OF THE INVENTION

The invention seeks to provide an improved method and apparatus for flow control and QoS provision in packet-switched or frame relay systems. The method is particularly, but not necessarily exclusively, directed to Ethernet-based systems.

### SUMMARY OF THE INVENTION

The present invention takes advantage of link aggregation methods to provide a prioritised transmission scheme in which traffic allocated differing priorities can be carried over a single physical link by means of an aggregation of distinct logical links corresponding to the differing priorities. Use of per-logical link PAUSE frames to temporarily suspend transmission for a specific priority overcomes problems previously associated with suspending traffic for all priorities when there is excess traffic only from one or more lower-priority traffic streams.

According to a first aspect of the present invention there is provided a transmitter for a communications system comprising: a plurality of medium access control entities and associated queues; a de-multiplexer arranged to receive data frames each comprising an indication of a priority, and to allocate the data frames to the medium access control entities according to the indication of a priority; wherein each of the plurality of medium access control entities is arranged to transmit data frames from their respective input queues and to suspend transmission of data frames to a remote unit responsive to receipt, directed to that medium access control entity, of a request to suspend transmission; a multiplexer arranged to multiplex transmissions from the plurality of medium access control entities onto a single channel.

In a preferred embodiment, the data frames are Ethernet frames.

Preferably the request to suspend transmission comprises a PAUSE frame.

Preferably, all frames having the same indication of priority are directed to the same medium access control entity.

In a further preferred embodiment, the single channel is a physical channel.

The invention is also directed to a communications system comprising such a transmitter.

According to a further aspect of the present invention there is provided a receiver for a communications system comprising, a plurality of medium access control entities and associated queues; a de-multiplexer arranged to de-multiplex data frames received on a single channel and each comprising an indication of priority, and to allocate the data frames to the medium access control entities according to the indication of priority; wherein each of the medium access control entities is arranged to transmit a request to suspend transmissions to that medium access control entity responsive to its associated queue fitting to a predetermined threshold level; and a multiplex arranged to multiplex data frames from the respective queues of the medium access control entities onto a single channel.

In a preferred embodiment, the data frames are Ethernet frames.

Preferably, the request to suspend comprises a PAUSE frame.

Preferably, all frames having the same indication of priority are directed to the same medium access control entity.

In a further preferred embodiment, the single channel is a physical channel.

The invention is also directed to a telecommunications system comprising such a receiver.

The invention is also directed to a communications system comprising such a receiver and such a transmitter; and a communications medium arranged to couple the single channel of the transmitter to the single channel of the receiver.

The invention also provides for a system for the purposes of communications which comprises one or more instances of apparatus embodying the present invention, together with other additional apparatus.

The invention is also directed to methods by which the described apparatus operates and including method steps for carrying out every function of the apparatus.

In particular, according to a further aspect of the present invention there is provided a method of prioritising transmission of data frames each having an indication of priority comprising the steps of at a transmitter: receiving a stream of data frames; scheduling forwarding of the data frames over a single link responsive to their respective indication of priority; suspending forwarding of frames of a given priority responsive to receipt of a request to suspend forwarding of these frames.

According to a further aspect of the present invention there is provided a method of prioritising transmission of data frames each having an indication of priority, comprising the steps of, at a receiver: receiving a stream of data frames: storing the data frames in a plurality of queues responsive to their respective indication of priority: sending a request to suspend further transmission of frames of a given priority responsive to a queue associated with the given priority filling to a predetermined threshold.

The invention also provides for computer software in a machine-readable form and arranged, in operation, to carry out every function of the apparatus and/or methods.

In particular, according to a further aspect of the present invention there is provided a program for a computer on a machine readable medium for prioritising transmission of data frames each having an indication of priority comprising code portions arranged for: receiving a stream of data frames; scheduling forwarding of the data frames over a single link responsive to their respective indication of priority; suspending forwarding of frames of a given priority responsive to receipt of a request to suspend forwarding of these frames.

According to a further aspect of the present invention there is provided a program for a computer on a machine readable medium for prioritising transmission of data frames each having an indication of priority, comprising code portions arranged for: receiving a stream of data frames; storing the data frames in a plurality of queues responsive to their respective indication of priority; sending a request to suspend further transmission of frames of a given priority responsive to a queue associated with the given priority filling to a predetermined threshold.

According to a further aspect of the present invention there is provided a method of transmitting data over a communications network, the method comprising: receiving the data having differing priorities within a predetermined range of priorities; providing a plurality of logical links each associated with distinct priorities within the range; allocating the data to the plurality of logical links according to priority; aggregating the plurality of logical links onto a single physical link for transmission to a receiver; using per-logical link transmission suspension to selectively suspend traffic over the single link associated with a specific priority.

In a preferred embodiment, the per-link transmission suspension is performed responsive to receipt, from the receiver, of a request to suspend transmission for a specified priority of traffic.

Preferably, the request contains an indication of a duration during which traffic is to be suspended.

In a preferred embodiment, data is transmitted using an Ethernet protocol.

Preferably, data is transmitted using an Ethernet protocol and the request is an Ethernet PAUSE frame.

According to a further aspect of the present invention there is provided an arrangement for transmitting data over a communications network, the arrangement comprising: apparatus arranged to receive the data having differing priorities within a predetermined range of priorities; a plurality of logical communication links each associated with distinct priorities within the range; apparatus arranged to allocate the data to the plurality of logical links according to priority; apparatus arranged to aggregate the plurality of logical links onto a single physical link for transmission to a receiver; apparatus arranged to perform per-logical link transmission suspension to selectively suspend traffic over the single link associated with a specific priority.

According to a further aspect of the present invention there is provided a program for a computer on a machine-readable medium for transmitting data over a communications network, the program comprising code portions arranged for: receiving the data having differing priorities within a predetermined range of priorities; allocating the data to a plurality of logical links each associated with distinct priorities within the range according to priority; aggregating the plurality of logical links onto a single physical link for transmission to a receiver; controlling per-logical link transmission suspension to selectively suspend traffic over the single link associated with a specific priority.

The preferred features may be combined as appropriate, as would be apparent to a skilled person, and may be combined with any of the aspects of the invention.

### BRIEF DESCRIPTION OF THE DRAWINGS

In order to show how the invention may be carried into effect, embodiments of the invention are now described below by way of example only and with reference to the accompanying figures in which:
Figure 1 shows a schematic diagram of a first system arrangement in accordance with the present invention;
Figure 2 shows a schematic diagram of a second system arrangement in accordance with the present invention;

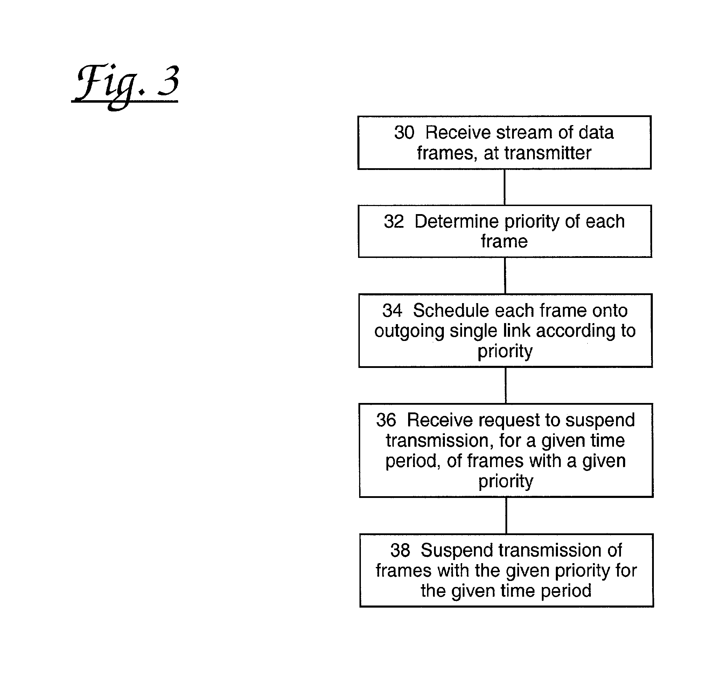

Figure 3 shows an example of a transmission method in accordance with the present invention;

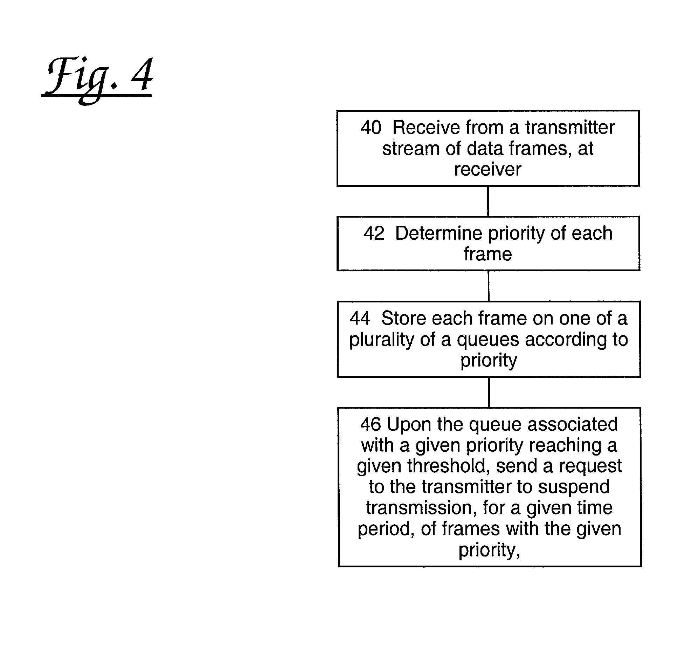

Figure 4 shows an example of a reception method in accordance with the present invention.

### DETAILED DESCRIPTION OF INVENTION

The present invention recognises that in principle, each link of those comprising an aggregated link can separately support the Ethernet PAUSE frame mechanism. Thus if a particular link receiver within the aggregate becomes overloaded, the corresponding transmitter can be turned off without affecting the other links in the aggregate by targeting a PAUSE frame to the correct MAC address. This provides great advantages in that only some links of an aggregate are affected. The way in which this can be achieved is now described with reference to a preferred embodiment of the invention.

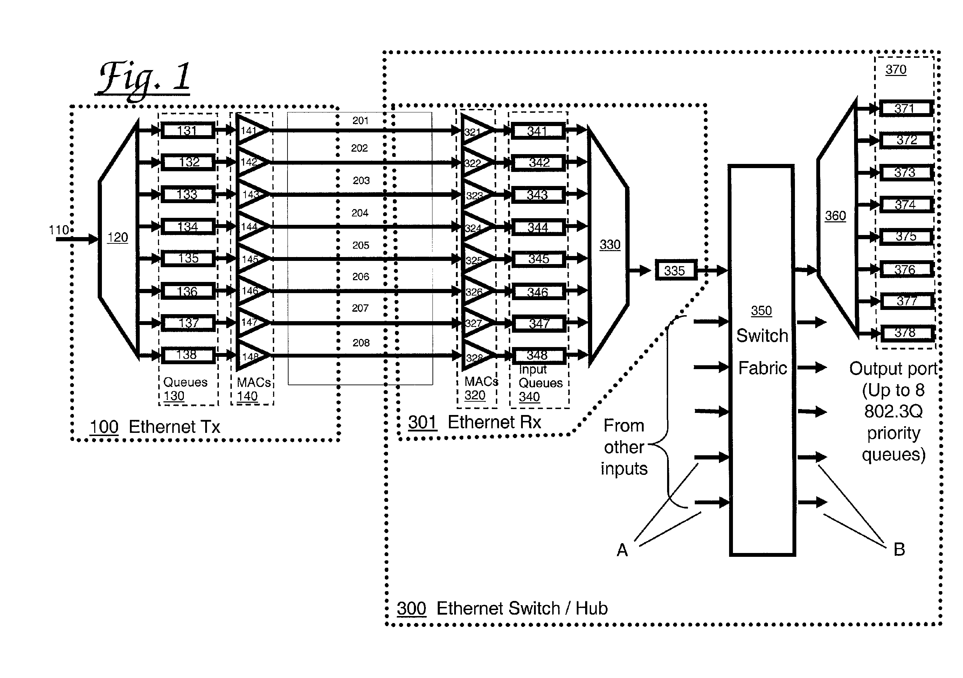

Referring now to Figure 1, an arrangement according to the present invention comprises an Ethernet Network Interface Card (NIC) 100 (for example on a host machine). Such a card has an overall MAC address just like a traditional Ethernet card. The NIC comprises a connection 110 to/from a client application which originates Ethernet frames, a group 130 of queues 131-138, a demultiplexer 120 which classifies frames from the client according to 802.1Q priority and allocates them into the appropriate queue 131-138 for that priority. It further comprises a group 140 of subsidiary MAC's 141-148, with one such MAC associated with each queue to form an aggregator group (as known in the art and specified by the 802.3 aggregation group set-up protocol). As shown in Figure 1, eight aggregator groups are preferably provided as specified in the protocol just mentioned. These eight aggregator groups are also referred to as subsidiary MAC layers, and each has a distinct individual address. Each aggregate group holds items of the same priority level, with 8 priority levels being provided in the example of Figure 1.

These MAC layers in the transmitter are connected by means of eight individual connections 201-208 to a group 320 of subsidiary MAC's 321-328 of an Ethernet receiver 301 which forms part of an Ethernet switch/hub. The Switch/Hub 300 comprises multiple input and output ports and is arranged such that input traffic from any port can be switched to any output, and in preferred embodiments contains store and forwarding buffers both on input and output. In the example in Figure 1 the multiple input ports are labelled A and the output ports B.

The receiver MAC's 321-328 place received frames on respective fabric input queues 341-348.

A Multiplexer 330 is provided in the hub 300 connected to the fabric input queues. Received frames each have a MAC address depending on the MAC layer in the transmitter that the frame was issued from. The multiplexer 330 in the hub 300 replaces those MAC addresses by a single port MAC address which is pre-specified. That is, the multiplexer reassigns the port MAC address for whole input port in place of the subsidiary MAC address so that the whole of the input data appears to have issued from a single Ethernet input port. The multiplexer then places the received frames into a shared buffer 335 ready for switching through a switch fabric 350 to a demultiplexer 360 and so to outport ports 370.

The switch fabric 350 takes the highest priority frames from its input ports using priority information in the frames and directs them to the correct output port provided that the relevant output port is not blocked because the appropriate output queue 371-8 is too full.

At each output port of the switch fabric 350, a de-multiplexer 120 directs outgoing packets to the correct one of the group 370 of output queues 371-378 according to frame priority in the same fashion as for the NIC 100. As in the NIC 100, each output priority queue has an associated MAC entity (not shown).

Note that whilst in Figure 1, data transmission is indicated in one direction only, in practice a corresponding structure is typically provided to support full bi-directional data flow between client nodes and the switch.

Each queue 131-138 in the 802.1Q transmitter 100 is connected to a separate (physical) transmission link 201-208. The 802.1Q marking scheme may be used as the link selection algorithm for an eight-link 802.3 aggregated link scheme. If a situation occurs in which one of the low priority queues is blocked by receiver overload as envisaged above, then the PAUSE frame mechanism is preferably used to suppress transmission of traffic from that specific queue whilst leaving the higher priority (and lower priority) frames free to transmit on the other links. In particular, if a particular receiver queue 341 fills up past a threshold, a PAUSE frame is sent back by the associated MAC 321 to the corresponding transmitter MAC 141 to suspend transmission for a time period indicated in the PAUSE frame. Only the relevant traffic is stopped.

Ideally the threshold value is calculated so that the queue would not overflow as a result of further traffic being sent on that link by the remote transmitter during the time interval between the PAUSE frame being sent from the receiver, and being received at the transmitter to suspend transmission on that link. This threshold would typically be at least two full-size frames lower than the actual queue size.

The timeout value associated with the PAUSE frame may be set to any suitable value according to network policy. The value may be predetermined, or may depend upon known characteristics of the specific subsidiary MAC link, or upon characteristics of any of the subsidiary MAC links making up the connection between NIC and switch.

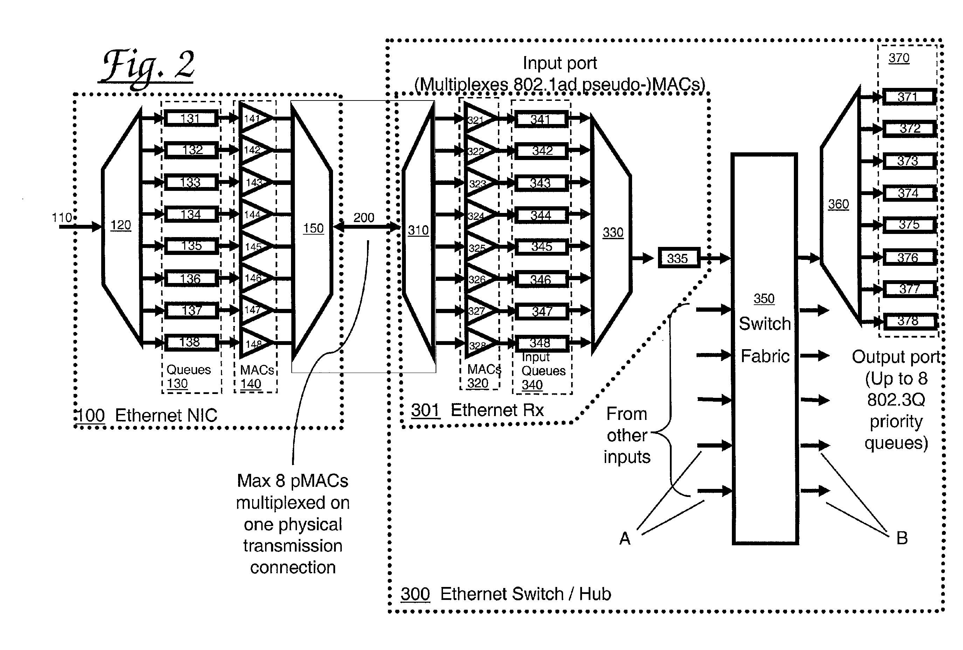

Referring now to Figure 2, a second arrangement is shown in which the eight subsidiary MAC links 201-208 of the arrangement of Figure 1 are multiplexed 150 onto a single physical link 200 and demultiplexed 310 at the receiver. In this way the end points 100, 301 of the link are connected by a single physical link which is subdivided into eight logical links, each used for one class of 802.1Q traffic. Frames are scheduled onto the single physical link using a priority scheduler as for a standard 802.1Q transmitter. A queue which is PAUSE'd may be considered to be empty for the purposes of the transmission algorithm and hence frames will be taken from the highest priority non-PAUSE'd, non-empty queue.

The multiplexer selects frames to be transmitted from queues 131-138 via MAC's 141-148 onto link 200 which provides a bi-directional full duplex link between the NIC 100 and the Ethernet receiver 301 at the switch/hub 300 via de-multiplexer 310 which classifies frames according to subsidiary MAC address as assigned to the subsidiary MAC's 321-328 of the receiver.

Use of multiple MAC's on a single physical link improves the performance of an 802.1Q prioritisation scheme by preventing excess traffic converging on a hub output from blocking traffic at other priorities from using the link whether at higher or lower priorities.

Furthermore, use of the 802.3 link aggregation scheme supports the carriage of 802.1Q traffic in a readily differentiable form across one or more links.

It will be apparent to one skilled in the art that the medium access control entities described above may be actual physical entities, but may equally be virtual (i.e. software) entities.

Any range or device value given herein may be extended or altered without losing the effect sought, as will be apparent to the skilled person for an understanding of the teachings herein.

## Claims

1. A transmitter for a communications system comprising:
a plurality of medium access control entities and associated queues;
a de-multiplexer arranged to receive data frames each comprising an indication of a priority, and to allocate the data frames to the medium access control entities according to the indication of a priority;
wherein each of the plurality of medium access control entities is arranged to transmit data frames from their respective input queues and to suspend transmission of data frames to a remote unit responsive to receipt, directed to that medium access control entity, of a request to suspend transmission;
a multiplexer arranged to multiplex transmissions from the plurality of medium access control entities onto a single channel.

2. A transmitter for a communication system according to claim 1 in which the data frames are Ethernet frames.

3. A transmitter for a communication system according to any one of claims 1-2 in which the request to suspend transmission comprises a PAUSE frame.

4. A transmitter according to any one of claims 1-3 in which all frames having the same indication of priority are directed to the same medium access control entity.

5. A transmitter according to any one of claims 1-4 in which the single channel is a physical channel.

6. A telecommunications system comprising a transmitter according to any one of claims 1-5.

7. A receiver for a communications system comprising, a plurality of medium access control entities and associated queues;
a de-multiplexer arranged to de-multiplex data frames received on a single channel and each compromising an indication of priority, and to allocate the data frames to the medium access control entities according to the indication of priority;
wherein each of the medium access control entities is arranged to transmit a request to suspend transmissions to that medium access control entity responsive to its associated queue fitting to a predetermined threshold level;
and a multiplex arranged to multiplex data frames from the respective queues of the medium access control entities onto a single channel.

8. A receiver according to claim 7 in which the data frames are Ethernet frames.

9. A receiver according to any one of claims 7-8 in which the request to suspend comprises a PAUSE frame.

10. A receiver according to any one of claims 7-9 in which all frames having the same indication of priority are directed to the same medium access control entity.

11. A transmitter according to any one of claims 7-10 in which the single channel is a physical channel.

12. A telecommunications system comprising a receiver according to any one of claims 7-11.

13. A telecommunications system comprising:
a receiver according to any one of claims 7-12;
a transmitter according to any one of claims 1-6;
a communications medium arranged to couple the single channel of the transmitter to the single channel of the receiver.

14. A method of prioritising transmission of data frames each having an indication of priority comprising the steps of, at a transmitter.
receiving a stream of data frames;
scheduling forwarding of the data frames over a single link responsive to their respective indication of priority;
suspending forwarding of frames of a given priority responsive to receipt of a request to suspend forwarding of these frames.

15. A method of prioritising transmission of data frames each having an indication of priority, comprising the steps of, at a receiver:
receiving a stream of data frames:
storing the data frames in a plurality of queues responsive to their respective indication of priority:
sending a request to suspend further transmission of frames of a given priority responsive to a queue associated with the given priority filling to a predetermined threshold.

16. A program for a computer on a machine readable medium for prioritising transmission of data frames each having an indication of priority comprising code portions arranged for:
receiving a stream of data frames;
scheduling forwarding of the data frames over a single link responsive to their respective indication of priority;
suspending forwarding of frames of a given priority responsive to receipt of a request to suspend forwarding of these frames.

17. A program for a computer on a machine readable medium for prioritising transmission of data frames each having an indication of priority, comprising code portions arranged for:
receiving a stream of data frames:
storing the data frames in a plurality of queues responsive to their respective indication of priority:
sending a request to suspend further transmission of frames of a given priority responsive to a queue associated with the given priority filling to a predetermined threshold.

18. A method of transmitting data over a communications network, the method comprising:
receiving the data having differing priorities within a predetermined range of priorities;
providing a plurality of logical links each associated with distinct priorities within the range;
allocating the data to the plurality of logical links according to priority;
aggregating the plurality of logical links onto a single physical link for transmission to a receiver;
using per-logical link transmission suspension to selectively suspend traffic over the single link associated with a specific priority.

19. A method according to claim 18 in which the per-link transmission suspension is performed responsive to receipt, from the receiver, of a request to suspend transmission for a specified priority of traffic.

20. A method according to claim 19 in which the request contains an indication of a duration during which traffic is to be suspended.

21. A method according to any one of claims 18-20 in which data is transmitted using an Ethernet protocol.

22. A method according to claim 19 in which data is transmitted using an Ethernet protocol and in which the request is an Ethernet PAUSE frame.

23. An arrangement for transmitting data over a communications network, the arrangement comprising:
apparatus arranged to receive the data having differing priorities within a predetermined range of priorities;
a plurality of logical communication links each associated with distinct priorities within the range;
apparatus arranged to allocate the data to the plurality of logical links according to priority;
apparatus arranged to aggregating the plurality of logical links onto a single physical link for transmission to a receiver;
apparatus arranged to perform per-logical link transmission suspension to selectively suspend traffic over the single link associated with a specific priority.

24. A program for a computer on a machine-readable medium for transmitting data over a communications network, the program comprising code portions arranged for:
receiving the data having differing priorities within a predetermined range of priorities;
allocating the data to a plurality of logical links each associated with distinct priorities within the range according to priority;
aggregating the plurality of logical links onto a single physical link for transmission to a receiver;
controlling per-logical link transmission suspension to selectively suspend traffic over the single link associated with a specific priority.
